# EUROPEAN PATENT SPECIFICATION

(11) **EP 1 555 490 B1**
(45) Date of publication and mention of the grant of the patent: **11.10.2006**
(21) Application number: 05000693.1
(22) Date of filing: 14.01.2005
(51) Int. Cl.: F24F 11/00

(54) **Air conditioner**
Klimaanlage
Conditionneur d'air

(30) Priority: 14.01.2004 JP 2004006648
(43) Date of publication of application: 20.07.2005
(73) Proprietor: SANYO ELECTRIC CO., LTD., Moriguchi-shi, Osaka (JP); SANYO AIR-CONDITIONERS CO., LTD., Ora-gun, Gunma (JP)
(72) Inventor: Unigada, Hiroaki, Oizumi-machi Ora-gun Gunma (JP); Tobi, Yukio, Ota-shi Gunma (JP); Matsumoto, Kouichi, Kumagaya-shi Saitama (JP)
(74) Representative: Parry, Simon James

(56) References cited:
- EP-A- 0 785 655
- PATENT ABSTRACTS OF JAPAN vol. 2000, no. 26, 1 July 2002 (2002-07-01) & JP 2001 241740 A (MATSUSHITA ELECTRIC IND CO LTD), 7 September 2001 (2001-09-07)
- PATENT ABSTRACTS OF JAPAN vol. 1999, no. 14, 22 December 1999 (1999-12-22) & JP 11 248235 A (SANYO ELECTRIC CO LTD), 14 September 1999 (1999-09-14)
- PATENT ABSTRACTS OF JAPAN vol. 1996, no. 04, 30 April 1996 (1996-04-30) & JP 07 332774 A (HITACHI LTD), 22 December 1995 (1995-12-22)
- PATENT ABSTRACTS OF JAPAN vol. 018, no. 127 (M-1569), 2 March 1994 (1994-03-02) & JP 05 312375 A (HITACHI LTD; others: 01), 22 November 1993 (1993-11-22)
- PATENT ABSTRACTS OF JAPAN vol. 016, no. 235 (M-1257), 29 May 1992 (1992-05-29) & JP 04 048143 A (HITACHI LTD), 18 February 1992 (1992-02-18)
- PATENT ABSTRACTS OF JAPAN vol. 015, no. 513 (M-1196), 26 December 1991 (1991-12-26) & JP 03 225145 A (MITSUBISHI ELECTRIC CORP), 4 October 1991 (1991-10-04)

## Description

### TECHNICAL FIELD

The present invention relates to an air conditioner, and more particularly relates to means for resuming the operation for an air conditioner after an electric power failure where a plurality of indoor units are connected to an outdoor unit.

### BACKGROUND ART

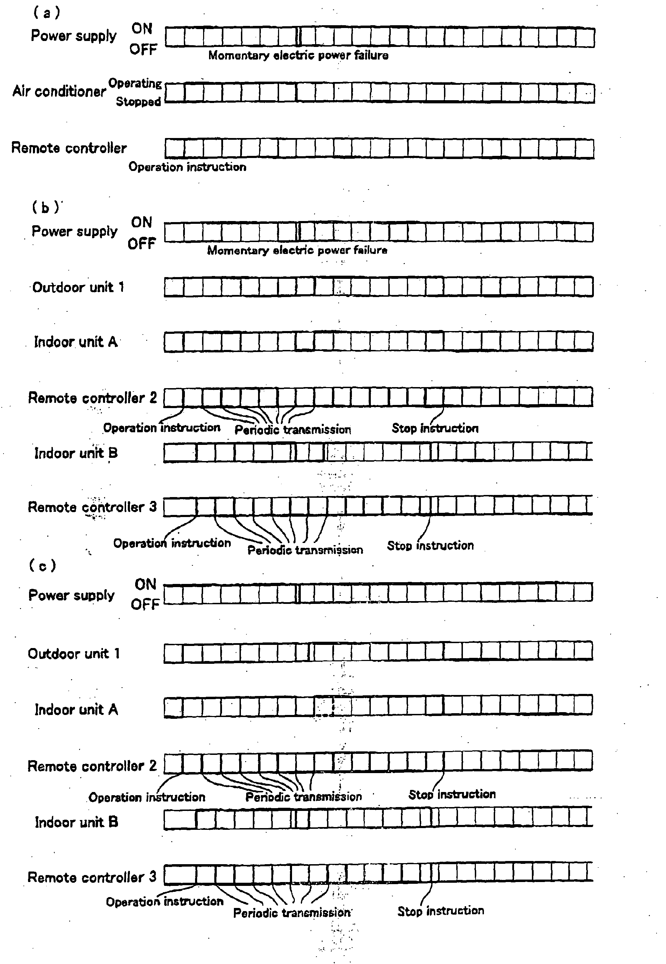

Conventionally, after an air conditioner such as a room air conditioner starts the operation upon a remote controller outputting an operation signal, and a momentary electric power failure then occurs, even if the electric power recovers, a microcomputer on a main unit of the air conditioner has been initialized by the electric power failure, and the air conditioner stays in a stop state as shown in Fig. 6(a). However, the electric power failure occurs frequently in an area where the state of the electric power supply is not favorable, and it is thus desirable that the air conditioners automatically resume the operation thereof after the electric power recovers. Air conditioners which automatically resume the operation thereof upon the electric power recovery are described in Japanese Laid-Open Patent Publications (Kokai) No. 2001-241740 and No. H7-225045.

The air conditioner disclosed in Japanese Laid-Open Patent Publication (Kokai) No. 2001-241740 always stores the operation state onto a nonvolatile memory device such as an EEPROM, and automatically starts the operation upon an electric power recovery based on the stored data. However, the nonvolatile memory device such as the EEPROM is expensive, and has a limit on the number of the rewrites of the stored contents, and if the operation state is successively stored, the rewrite of the data becomes no longer available consequently, and the replacement becomes necessary before the service life of the air conditioner ends. On the other hand, if the frequency of storing the operation state is set to low, the operation state stored upon the electric power failure may be rather old, and may be largely different from the operation state immediately before the electric power failure.

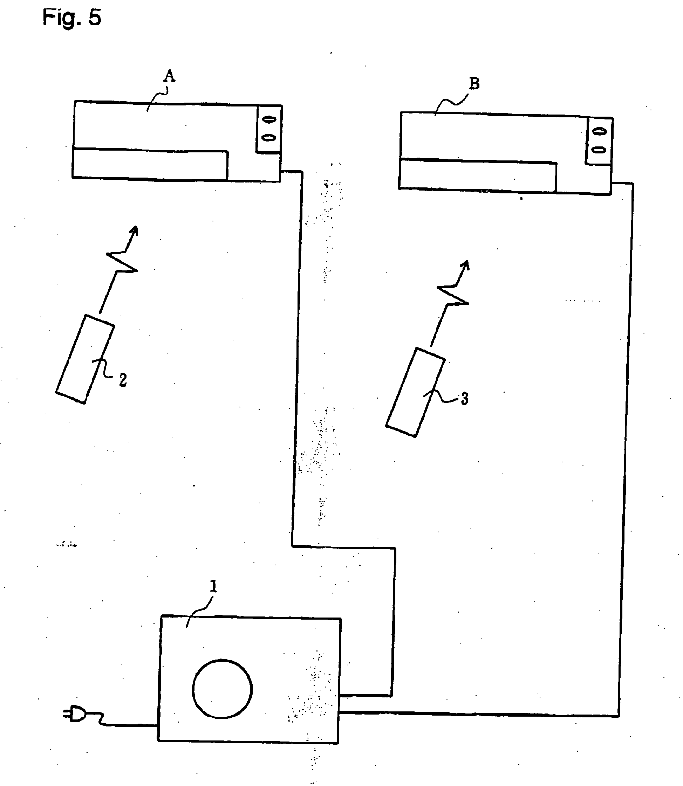

The air conditioner disclosed In Japanese Laid-Open Patent Publication (Kokai) No. H7-225045 is caused to resume the operation by a transmission of an operation mode from a remote controller. If one indoor unit is connected to one outdoor unit (namely single connection), the operation surly resumes smoothly. However, there is a case where a plurality of indoor units A, B are connected to one outdoor unit 1 (namely multi connection) as shown in Fig. 5. In addition, as the operation modes of the air conditioner, there is a manual mode where a heating operation, a cooling operation, a dehumidifying operation, or the like is instructed to the indoor units A, B, and an automatic mode where an automatic operation (operation which automatically sets an operation mode based on the room temperature and the outdoor temperature upon the operation starting) is instructed. The outdoor unit 1 is placed in a heating operation mode where refrigerant in the refrigerating cycle is supplied from a heat exchanger for the outdoor unit to the indoor unit via a compressor upon the heating operation, and is placed in a cooling operation mode where the refrigerant in the refrigerating cycle is supplied from the compressor to the indoor unit via the heat exchanger for the outdoor unit upon the cooling operation and the dehumidifying operation. Consequently, in the case of the multi connection, if the indoor unit B is caused to carry out the heating operation In the manual mode while the indoor unit A is carrying out the cooling operation, it is necessary to place the outdoor unit 1 in the cooling operation mode to the heating operation mode which is different in the operation mode, an alert due to the difference in the mode is consequently generated, and the start of the operation of the indoor unit B is not accepted. When the indoor unit A is carrying out the cooling operation, if the other indoor unit B is caused to carry out the automatic operation, a microcomputer of the indoor unit B selects the optimal operation mode based on the room temperature, the outdoor temperature, and the like. If the optimal operation mode is the cooling operation, the operation modes coincide with each other for the outdoor unit 1, and the indoor unit B thus starts the cooling operation. On the other hand, if the optimal operation mode is the heating operation, the operation modes are different from each other for the outdoor unit 1, there is thus a difference in the mode, the microcomputer of the indoor unit B determines a difference in the mode, the outdoor unit 1 maintains the cooling operation mode, and the indoor unit B starts the dehumidifying operation instead of the heating operation.

There is considered a case where the operation is resumed by transmitting an operation mode from remote controllers 2, 3 on an air conditioner having a multi connection as described in Japanese Laid-Open Patent Publication (Kokai) H7-22S045. Upon an electric power recovery, there is such a case that the remote controller 3 for the indoor unit B is in the automatic mode, and the remote controller 2 for the indoor unit A is in the manual mode of the cooling operation. If the signal from the remote controller 3 for the indoor unit B is received earlier than the signal from the remote controller 2 for the indoor unit A, and the optimal operation mode of the indoor unit B in the automatic mode is the heating operation, the operation of the outdoor unit 1 resumes in the heating operation mode. If the indoor unit A then receives the signal for the cooling operation, it is necessary to place the outdoor unit 1 in the cooling operation mode; which is different from the heating operation mode, there occurs a difference in the mode, an alert is generated, and the start of the operation of the indoor unit A is not accepted. Consequently, the operation of the indoor unit A cannot be resumed. In this way, there may be a case where the operation is not resumed smoothly upon an electric power recovery.

Problems to be solved include the necessity of the replacement of the nonvolatile memory device such as an EEPROM, if used, due to the inability of the rewriting of the data before the service life of the air conditioner expires, and the possibility of failure in the smooth resumption of the operation upon the operation being resumed by the transmission of the operation mode from the remote controller in the case of the multi connection.

### DISCLOSURE OF THE INVENTION

According to a first aspect of the present invention, there is provided an air conditioner, where an outdoor unit (1) is connected to a plurality of indoor units (A, B), remote controllers (2, 3) are respectively provided for the respective indoor units, the remote controllers are operated to transmit an operation in a manual mode instructing a heating operation, a cooling operation, a dehumidifying operation, and the like, or an operation in an automatic mode instructing an automatic operation as an operation instruction signal to the indoor units, resulting in the indoor units and outdoor unit starting the operation. The air conditioner is comprised of operation resuming means which resumes the operations of the indoor units and the outdoor unit upon an electric power recovery after the indoor units and the outdoor unit being stopped operating due to an electric power failure, an operation power source of the remote controllers is backed up by a battery, and the remote controllers thus transmit a periodic transmission signal including the instructed operation mode at a predetermined time interval after the operation instruction signal being transmitted, and when the operation resuming means receives the periodic transmission signal from the remote controller while the indoor units are stopped after an electric power recovery, if the instructed operation mode is the manual mode, the operation resuming means resumes the operations of the outdoor unit and a corresponding indoor unit upon a first periodic transmission signal, and alternatively if the instructed operation mode is the automatic mode, the operation resuming means resumes the operations of the outdoor unit and the corresponding indoor unit upon a second periodic transmission signal, or third or subsequent periodic transmission signal.

According to a second aspect of the present invention, there is provided an air conditioner, where a remote controller is operated to transmit an operation in a manual mode instructing a heating operation, a cooling operation, a dehumidifying operation, and the like, or an operation of an automatic mode instructing an automatic operation as an operation instruction signal to the indoor unit, resulting in the indoor unit and an outdoor unit starting the operations. The air conditioner is comprised of operation resuming means which resumes the operations of the indoor unit and the outdoor unit upon an electric power recovery after the indoor unit and the outdoor unit being stopped operating due to an electric power failure, an operation power source of the remote controller is backed up by a battery, and the remote controller transmits a periodic transmission signal including the instructed operation mode at a predetermined time interval after the operation instruction signal being transmitted, and when the operation resuming means receives the periodic transmission signal from the remote controller while the indoor unit is stopped after an electric power recovery, if a single connection is provided, the operation resuming means resumes the operations of the outdoor unit and the indoor unit upon a first periodic transmission signal, if a multi connection is provided and the instructed operation mode Is the manual mode, the operation resuming means resumes the operations of the outdoor unit and a corresponding indoor unit upon a first periodic transmission signal, and if the multi connection is provided and the instructed operation mode is the automatic mode, the operation resuming means resumes the operations of the outdoor unit and the corresponding indoor unit upon a second periodic transmission signal, or third or subsequent periodic transmission signal.

According to a third aspect of the present invention, there is provided the air conditioner according to the first or second aspect, where if the outdoor unit has already been operating when the operation resuming means receives the first periodic transmission signal, the operation resuming means resumes the operation of the corresponding indoor unit upon the first periodic transmission signal regardless of the instructed operation mode.

According to the present invention, the remote controller whose operation power source is backed up by a battery, transmits the periodic transmission signal including the instructed operation mode at a predetermined time interval, and if the periodic transmission signal indicates the manual mode, the operation resuming means resumes the operations upon a first periodic transmission signal after an electric power recovery, and if the periodic transmission signal indicates the automatic mode, the operation resuming means resumes the operations upon a second periodic transmission signal, or third or subsequent periodic transmission signal. Since the resumption of the operation in the manual mode is prioritized over the resumption of the operation in the automatic mode, it is possible to prevent a difference in the mode upon the resumption of the operations. Consequently, the operation can be resumed smoothly upon an electric power recovery.

If the outdoor unit has already been operating upon the reception of the first periodic transmission signal, since the operation of the corresponding indoor unit is resumed upon the first periodic transmission signal regardless of the instructed operation mode, if the operation of another indoor unit has been resumed in the manual mode, and the operation of the outdoor unit has been resumed accordingly, the resumption can be promptly carried out upon the first periodic transmission signal even in the automatic mode.

### BRIEF DESCRIPTION OF THE DRAWINGS

Fig. 1 shows a circuit for control of an air conditioner according to the present invention;
Fig. 2 is a flowchart of a transmission carried out by a remote controller;
Fig. 3 is a flowchart of a resumption of an operation;
Fig. 4 is a flowchart of a variation of the resumption of the operation;
Fig. 5 is a schematic diagram of an air conditioner having a multi connection;
Fig. 6(a) is a timing chart for the air conditioner without operation resumption;
Fig. 6(b) is a timing chart for the air conditioner corresponding to the flowchart in Fig. 3; and
Fig. 6(c) is a timing chart for the air conditioner corresponding to the flowchart In Fig. 4.

### BEST MODE FOR CARRYING OUT THE INVENTION

An object of smoothly resuming the operation of an air conditioner having a multi connection without using a nonvolatile memory device such as an EEPROM after an electric power has recovered is achieved by resuming the operation upon a second periodic transmission signal, or third or subsequent periodic transmission signal in an automatic mode so as to prioritize a resumption of the operation in a manual mode over a resumption of the operation in the automatic mode thereby preventing a difference in the mode upon the operations resuming.

### [Embodiment 1]

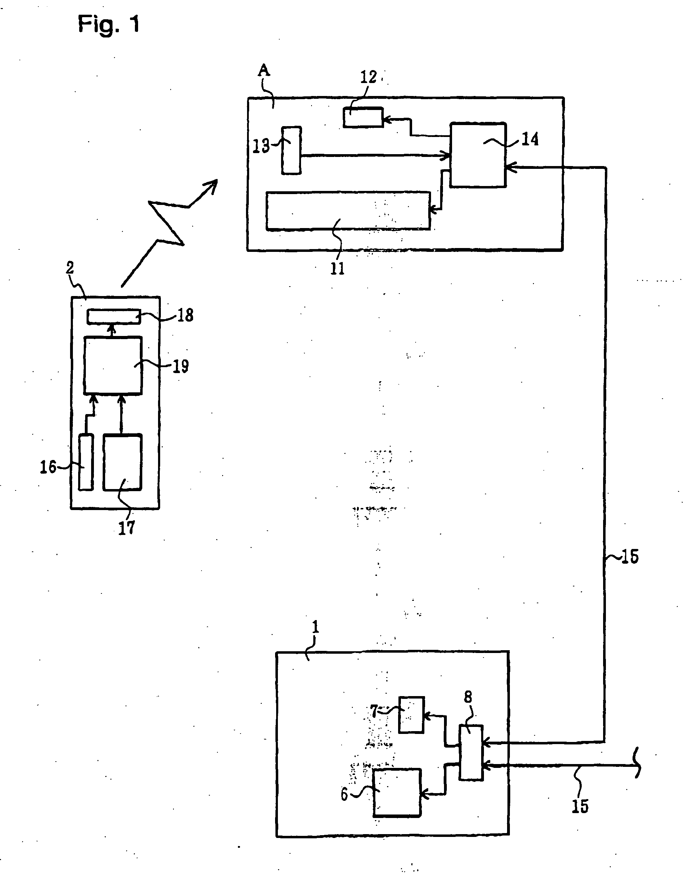

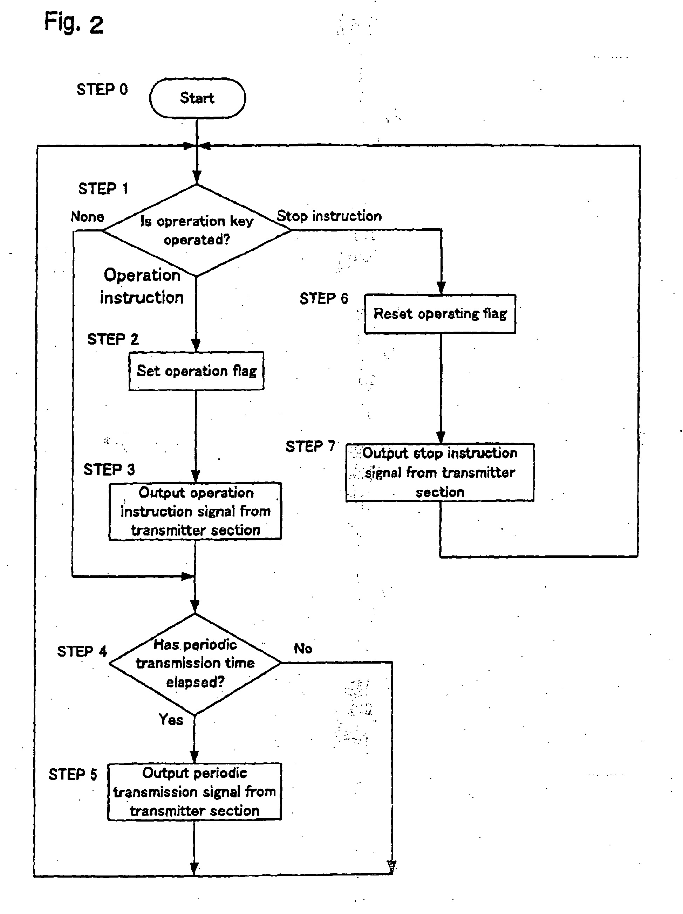

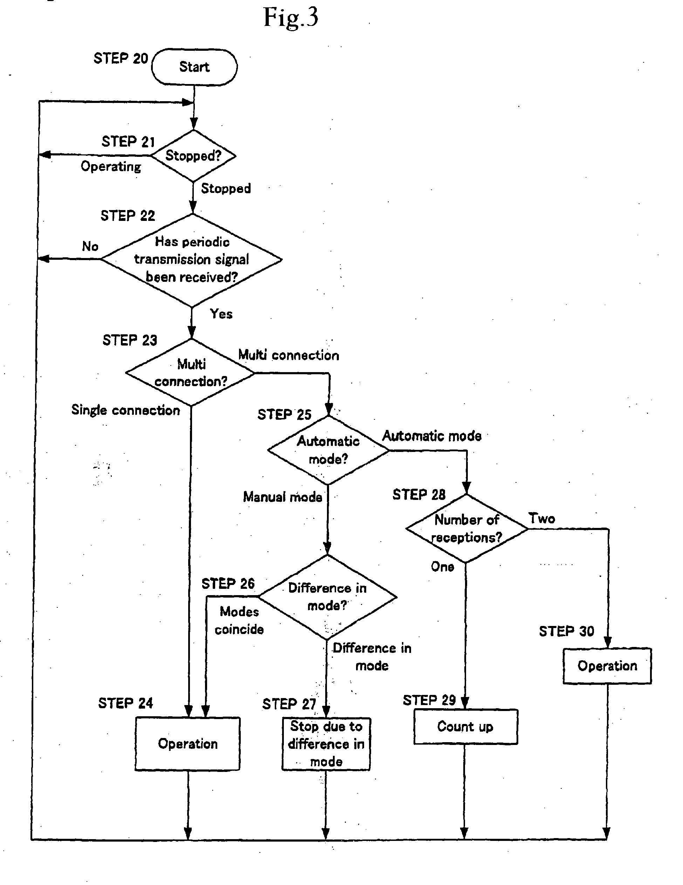

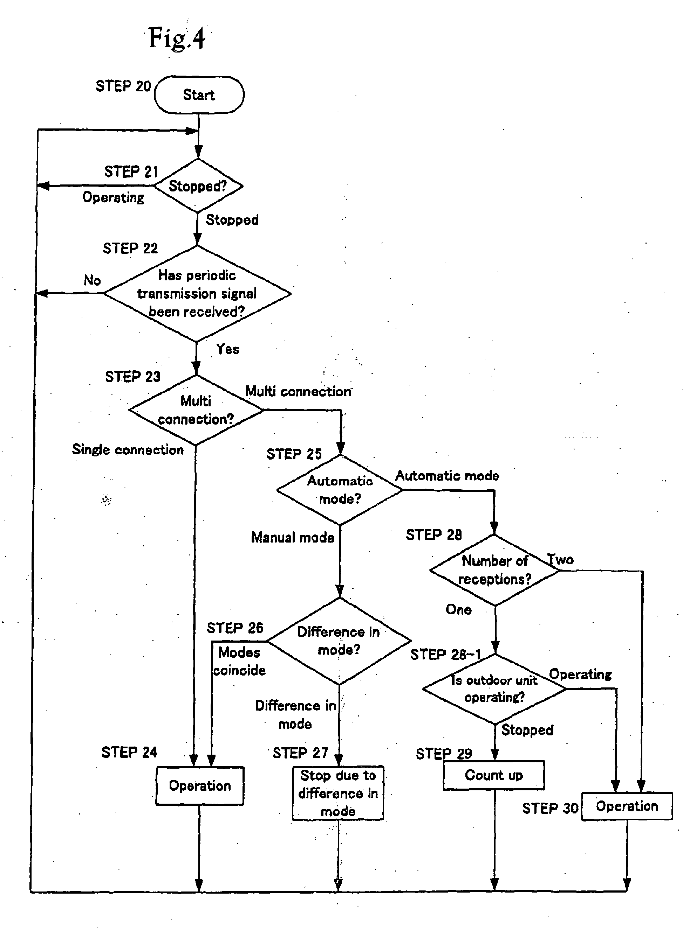

A description will now be given of an embodiment of the air conditioner according to the present invention with reference to Fig. 1 to Fig. 6. Fig. 1 shows a circuit for control of the air conditioner according to the present invention. Fig. 2 is a flowchart of a transmission carried out by a remote controller. Fig. 3 is a flowchart of a resumption of an operation. Fig. 4 is a flowchart of a variation of the resumption of the operation. Fig. 5 is a schematic diagram of an air conditioner having a multi connection. Fig. 6(a) is a timing chart for the air conditioner without operation resumption, Fig. 6(b) is a timing chart for the air conditioner corresponding to the flowchart in Fig. 3 and Fig. 6(c) is a timing chart for the air conditioner corresponding to the flowchart in Fig. 4. In Fig. 1, illustration of an outdoor unit B Is omitted.

First, a description will be given of the overall configuration of the air conditioner having the multi connection.

In Figs. 1 and 5, the air conditioner is provided with an outdoor unit 1, a plurality of indoor units A, B, which are connected to the outdoor unit 1, and remote controllers of wireless type 2, 3 provided for the respective indoor units A, B. The indoor units A, B are generally installed respectively in different rooms, and the outdoor unit 1 is installed outdoors. The outdoor unit 1 is provided with a compressor 6, which compresses refrigerant, a heat exchanger (not shown), a refrigerant flow passage selector valve 7, which selects a circulation passage of the refrigerant, a microcomputer 8 serving as a control device, and the like. Upon an instruction of the microcomputer 8, the compressor 6 is started, and the refrigerant flow passage selector valve 7 is switched so as to provide a heating operation mode where the refrigerant in the refrigerating cyde is supplied from a heat exchanger for the outdoor unit (not shown) to the indoor units A, B via the compressor 6, or a cooling operation mode where the refrigerant in the refrigerating cycle is supplied from the compressor 6 to the indoor units A, B via the heat exchanger for the outdoor unit.

The respective indoor units A, B are provided with a heat exchanger (not shown), a blower 11, a buzzer 12, a receiver section 13, a louver (not shown), a microcomputer 14 serving as a control device, and the like, and the blower 11, the buzzer 12, the louver, and the like operate according to instructions from the microcomputer 14. The microcomputers 14 of the respective indoor units A, B are connected to the microcomputer 8 of the outdoor unit 1 via a signal line 15. The respective remote controllers 2, 3 are provided with a room temperature sensor 16, an operation section 17, a transmitter section 18, a microcomputer 19 serving as a control device, and the like. The outdoor unit 1 and the indoor units A, B are supplied with an electric power via a power line, and the remote controllers 2, 3 operates on a battery such as a dry battery (namely the operation power source is backed up by the battery). Consequently, even if the power supply from the power line, which Is a power source of the outdoor unit 1 and the indoor units A, B, stops (namely an electric power failure), the operation of the remote controllers 2, 3 are not influenced.

A description will now be given of the flow of the transmission to the indoor units A, B by the remote controllers 2, 3 based on the flowchart in Fig. 2.

In STEP 1, the microcomputer 19 serving as the control device of the remote controller 2, 3 determines whether the operation section 17 of the remote controller 2, 3 is operated or not. If the operation is not carried out, the microcomputer 19 proceeds to STEP 4, if an operation instruction is instructed by an operation, the microcomputer 19 proceeds to STEP 2, and if a stop instruction is instructed by the operation, the microcomputer 19 proceeds to STEP 6.

If a case where the remote controller 2, 3 is not operated is first considered, the microcomputer 19 proceeds from STEP 1 to STEP 4, the microcomputer 19 determines whether a periodic transmission time has elapsed or not in STEP 4 (detailed later), and the microcomputer 19 returns to STEP 1 since the periodic transmission time has not elapsed. In this way, the microcomputer 19 waits for the operation of the remote controller 2, 3.

Alternatively, if the remote controller 2, 3 is operated, and there Is instructed the operation in the manual mode which instructs a heating operation, a cooling operation, a dehumidifying operation, and the like, or the operation in the automatic mode which instructs an automatic operation (operation carried out while the operation mode and the set temperature are automatically set according to the room temperature and the outdoor temperature upon the start of the operation) in STEP 1, the instructed operation mode is stored onto a memory section of the microcomputer 19, and the microcomputer 19 proceeds from STEP 1 to STEP 2. There is set an operation flag on the memory section of the microcomputer 19 so as to store that the state of the operation being carried out onto the memory section in STEP 2, and the microcomputer 19 proceeds to STEP 3. An operation instruction signal is transmitted from the transmitter section 18 of the remote controller 2, 3 to the receiver section 13 of the indoor unit A, B in STEP 3. If the microcomputer 14 of the indoor unit A, B receives the operation instruction signal via the receiver section 13, the microcomputer 14 causes the indoor unit A, B and the outdoor unit 1 to start the operation in the instructed operation mode, and activates the buzzer 12 to produce a buzzer sound. The operation instruction signal contains information such as a buzzer signal, an under-operation signal (namely a signal containing the operation flag), the set temperature set by the operation section 17, the room temperature detected by the room temperature sensor 16, and the instructed operation mode, and indicates itself as a signal used for starting the operation instructed by the operation carried out on the operation section 17 by means of presence of both the buzzer signal and the under-operation signal. After transmitting the operation instruction signal, the microcomputer 19 starts to measure the elapsed time for the periodic transmission time. The microcomputer 19 then proceeds to STEP 4.

The microcomputer 19 determines whether the periodic transmission time (such as five minutes) has elapsed or not in STEP 4, if the periodic transmission time has elapsed, the microcomputer 19 proceeds to STEP 5, and if the periodic transmission time has not elapsed, the microcomputer 19 proceeds to STEP 1. Thus, the microcomputer 19 waits while repeating the flow from STEP 4 to STEP 1, and then from STEP 1 to STEP 4 until the periodic transmission time has elapsed after the operation instruction signal is transmitted, and proceeds to STEP 5 if the periodic transmission time has elapsed.

The microcomputer 19 then transmits the periodic transmission signal from the transmitter section 18 of the remote controller 2, 3 to the receiver section 13 of the indoor unit A, B in STEP 5. The microcomputer 19 then resets a timer used for the periodic transmission time, starts to measure the elapsed time for the periodic transmission time again, and returns to STEP 1. Although the periodic transmission signal contains information such as the under-operation signal, the set temperature, the room temperature, and the instructed operation mode as the operation instruction signal does, the periodic transmission signal indicates a difference from the operation instruction signal used for starting the operation according to the operation carried out on the operation section 17 by means of absence of the buzzer signal. In this way, the periodic transmission signal is transmitted periodically (namely every time the periodic transmission time has elapsed), and thus has a function of supplying the indoor unit A, B with the information such as the room temperature as well as a function as a signal for resuming the operations after an electric power failure.

Then, the remote controller 2, 3 is operated, and if the stop of the operation is instructed by the operation, the microcomputer 19 proceeds from STEP 1 to STEP 6. The operation flag is reset on the memory section of the microcomputer 19 in STEP 6, and the microcomputer 19 proceeds to STEP 7.

A stop Instruction signal (namely a signal without the operation flag) is transmitted from the transmitter section 18 of the remote controller 2, 3 to the receiver section 13 of the indoor unit A, B, and simultaneously the timer for the periodic transmission time is reset in STEP 7. The microcomputer 19 then returns to STEP 1.

A description will now be given of a flow of the operation resumption after the electric power recovery of the indoor unit A and the outdoor unit 1 based on the flowchart in Fig. 3. Note that the flow of the operation resumption of the indoor unit B is the same as the flow of the indoor unit A.

Upon the electric power recovery, the indoor units A, B and the outdoor unit 1 are stopped. In addition, the microcomputers 14 of the indoor units A, B and the microcomputer 8 of the outdoor unit 1 are initialized upon the electric power recovery, and data of the operation state up to the present time is deleted. Further, the periodic transmission signal is transmitted by the remote controllers 2, 3 periodically (at the five-minute time interval), and is received by the receiver section 13 of the indoor units A, B.

The microcomputer 14 serving as the control device of the indoor unit A determines whether the operation resumption is to be carried out or not in STEP 21 and STEP 22. The microcomputer 14 of the indoor unit A determines whether the indoor unit A is stopped or not in STEP 21, and if the indoor unit A is operating, since it does not indicate an electric power recovery, the flow returns to STEP 21, and the microcomputer 14 does not enter the flow of the operation resumption. On the other hand. If the indoor unit A is stopped, the microcomputer 14 proceeds to STEP 22.

The microcomputer 14 determines whether the receiver section 13 has received the periodic transmission signal or not in STEP 22. If the periodic transmission signal has not been received, the stop state is normal, the microcomputer 14 thus returns to STEP 21, and the microcomputer 14 does not enter the flow of the operation resumption. Alternatively, if the periodic transmission signal is received, the microcomputer 14 enters the flow of the operation resumption and proceeds to STEP 23.

The microcomputer 14 of the indoor unit A inquires of the microcomputer 8 of the outdoor unit 1 about whether there is provided a multi connection or single connection in STEP 23, and if a single connection is provided, the microcomputer 14 proceeds to STEP 24, and the operations of the indoor unit A and the outdoor unit 1 are resumed based on the data contained in the periodic transmission signal. Alternatively, if there is provided a multi connection, the microcomputer 14 proceeds to STEP 25.

The microcomputer 14 determines whether the operation mode contained in the periodic transmission signal is the automatic mode or the manual mode in STEP 25, and proceeds to STEP 28 upon the automatic mode, and proceeds to STEP 26 upon the manual mode.

The microcomputer 14 determines whether the instructed manual mode (heating operation, dehumidifying operation, cooling operation, and the like) coincides with the operation mode (heating operation mode or cooling operation mode) of the outdoor unit 1 or not in STEP 26. Note that if the operation of the outdoor unit 1 is stopped (namely the operation mode is not specified yet), it is determined that the modes coincide with each other. If the modes coincide (the indoor unit A is instructed to carry out the heating operation and the outdoor unit 1 is in the heating operation mode, for example), the microcomputer 14 then proceeds to STEP 24, and the operations of the indoor unit A and the outdoor unit 1 resume. Note that if the outdoor unit 1 is already in operation, the operation is maintained. Altematlvely, if the instructed manual mode is different from the operation mode of the outdoor unit 1 (the indoor unit A is instructed to carry out the heating operation, and the outdoor unit 1 is in the cooling operation mode, for example), it is determined as the difference in the mode, the microcomputer 14 proceeds to STEP 27, the buzzer 12 is activated to generate the alarm, and the stop state is maintained.

Alternatively, if the microcomputer 14 determines that the operation mode is the automatic mode in STEP 25, the microcomputer 14 proceeds to STEP 28, and the microcomputer 14 refers to a counter thereof for the number of the receptions so as to determine the number of the receptions of the periodic transmission signal in STEP 28, Namely, the first reception corresponds to "one", and the microcomputer 14 thus proceeds to STEP 29, counts up the counter for the reception number (namely increments by one), and returns to STEP 21. The microcomputer 14 then receives the periodic transmission signal after the periodic transmission time (five minutes in the present embodiment) in STEP 22, and proceeds again to STEP 28.

The microcomputer 14 refers to the counter thereof for the reception number, determines that the reception number of the periodic transmission signal is "two" in STEP 28, and proceeds to STEP 30. The operations of the indoor unit A and the outdoor unit 1 are resumed in STEP 30. Note that if the outdoor unit 1 is already in operation, the operation is maintained.

A description will now be given of a time chart of the operations of the outdoor unit 1 and the Indoor units A, B based on Fig. 6(b). Note that the remote controller 2 of the indoor unit A is operated to instruct the manual mode. and the remote controller 3 of the indoor unit B is operated to instruct the automatic mode in the example in Fig. 6(b).

If the remote controller 2 is operated, and the operation instruction signal for the manual mode is transmitted as the operation instruction from the transmitter section 18 of the remote controller 2, the outdoor unit 1 and the indoor unit A corresponding to the remote controller 2 start the operations. The transmitter section 18 of the remote controller 2 then transmits the periodic transmission signal as the periodic transmission every time the periodic transmission time has elapsed.

After the remote controller 2 is operated, the remote controller 3 is operated, and the operation instruction signal for the automatic mode is transmitted as the operation instruction from the transmitter section 18 of the remote controller 3, the indoor unit B corresponding to the remote controller 3 starts the operation. The transmitter section 18 of the remote controller 3 then transmits the periodic transmission signal as the periodic transmission every time the periodic transmission time has elapsed.

If an electric power failure then occurs, the outdoor unit 1 and the indoor units A, B stop the operation. The indoor unit A in the manual mode resumes the operation upon the first periodic transmission after an electric power recovery. On this occasion, the outdoor unit 1 resumes the operation at the same time. The indoor unit B in the automatic mode resumes the operation upon the second periodic transmission after the electric power recovery. On this occasion, even if there arises such a condition that the periodic transmission signal contains a mode different from that of the outdoor unit 1, the indoor unit B in the automatic mode is placed to the mode corresponding to that of the outdoor unit 1, and starts the operation. If the remote controllers 2, 3 are then respectively operated, and the transmitter sections 18 of the remote controllers 2, 3 respectively transmit the stop instruction, the operations of the indoor units A, B and the outdoor unit 1 stop.

In this way, the indoor unit A in the manual mode is caused to resume the operation upon the first periodic transmission, the Indoor unit B in the automatic mode is caused to resume the operation upon the second periodic transmission, the indoor unit A in the manual mode thus resumes the operation earlier than the indoor unit B in the automatic mode, and there is consequently prevented a stop due to a difference in the mode.

A description will now be given of the variation of the flow of the operation resumption of the indoor unit A and the outdoor unit 1 after an electric power recovery based on the flowchart in Fig. 4. Note that the flow of the operation resumption of the indoor unit B Is the same as the flow of the indoor unit A.

The flowchart in Fig. 4 is the same as the flowchart In Fig. 3 except that STEP 28-1 is provided between STEP 28 and STEP 29.

A flow from STEP 20 to STEP 28 is the same as that of the flowchart in Fig. 3, and a description thereof is omitted. If the operation mode of the remote controller 2 corresponding to the indoor unit A is the automatic mode, and the periodic transmission signal of the first periodic transmission is received after the electric power recovery, the microcomputer 14 proceeds from STEP 28 to STEP 28-1. The microcomputer 14 of the indoor unit A inquires of the microcomputer 8 of the outdoor unit 1 about whether the outdoor unit 1 is operating or not in STEP 28-1. If the outdoor unit 1 is operating, the microcomputer 14 determines that the indoor unit B has resumed the operation in the manual mode, proceeds to STEP 30, and resumes the operation of the indoor unit A in STEP 30. Alternatively, if the outdoor unit 1 Is stopped in STEP 28-1, the microcomputer 14 proceeds to STEP 29.

A description will now be given of a time chart of the operations of the outdoor unit 1 and the indoor units A, B according to the variation in Fig. 4 based on Fig. 6(c). Note that the remote controller 2 of the indoor unit A is operated to instruct the automatic mode, and the remote controller 3 of the indoor unit B is operated to instruct the manual mode in the example in Fig. 6(c).

If the remote controller 2 is operated, and the operation instruction signal for the automatic mode is transmitted as the operation instruction from the transmitter section 18 of the remote controller 2, the outdoor unit 1 and the indoor unit A corresponding to the remote controller 2 start the operation. The transmitter section 18 of the remote controller 2 then transmits the periodic transmission signal as the periodic transmission every time the periodic transmission time has elapsed.

After the remote controller 2 is operated, the remote controller 3 is operated, and the operation instruction signal for the manual mode is transmitted as the operation instruction from the transmitter section 18 of the remote controller 3, the indoor unit B corresponding to the remote controller 3 starts the operation. The transmitter section 18 of the remote controller 3 then transmits the periodic transmission signal as the periodic transmission every time the periodic transmission time has elapsed.

If an electric power failure then occurs, the outdoor unit 1 and the indoor units A, B stop the operation. The indoor unit B in the manual mode resumes the operation upon the first periodic transmission after an electric power recovery. On this occasion; the outdoor unit 1 resumes the operation at the same time. The indoor unit A in the automatic mode A resumes the operation upon the first periodic transmission since the outdoor unit 1 is operating upon the first periodic transmission. On this occasion, even if there arises such a condition that the periodic transmission signal contains a mode different from that of the outdoor unit 1, the indoor unit A in the automatic mode is placed to the mode corresponding to the outdoor unit 1, and starts the operation. Note that the indoor unit A in the automatic mode resumes the operation upon the second periodic transmission as illustrated by broken lines in the embodiment shown in Fig. 3. If the remote controllers 2, 3 are then respectively operated, and the transmitter sections 18 of the remote controllers 2, 3 respectively transmit the stop instruction, the operations of the Indoor units A, B and the outdoor unit 1 stop.

In this way, since the indoor unit A in the automatic mode is caused to resume the operation if the outdoor unit 1 is operating upon the first periodic transmission after the electric power recovery, the resumption is more prompt than the case illustrated by the broken lines where the resumption is carried out upon the second periodic transmission.

As described above, control means is constituted by the plurality of microcomputers 8, 19, 14, and includes operation resuming means, the operation resuming means is constituted by the microcomputers 14, 8, and includes receiver means which receives the periodic transmission signal from the remote controllers while the indoor units are stopped after an electric power recovery, instructed operation mode determining means which determines whether the instructed operation mode is the manual mode or the automatic mode, manual mode resuming means which, if the instructed operation mode determining means determines that the instructed operation mode is the manual mode, resumes the operations of the outdoor unit and the corresponding indoor unit upon the first periodic transmission signal, and automatic mode resuming means which, if the instructed operation mode determining means determines that the instructed operation mode is the automatic mode, resumes the operations of the outdoor unit and the corresponding indoor unit upon the second periodic transmission signal.

The control means indudes means which carry out respective step corresponding to the respective steps to be carried out in addition to the above means. For example, the microcomputer 19 serving as the control device of the remote controllers 2, 3 includes operation instruction signal output means which, if the operation section 17 is operated, and the operation mode is thus instructed, transmits the corresponding operation instruction signal from the transmitter section 18, and periodic transmission means which transmits the instructed operation mode as the periodic transmission signal at the predetermined time interval after the transmission of the operation instruction signal.

The operation resuming means may further include outdoor unit operation determining means which determines whether the outdoor unit is operating or not upon receiving the first periodic transmission signal, and indoor unit operation resuming means that resumes the operation of the corresponding indoor unit upon the first periodic transmission signal regardless of the instructed operation mode if the outdoor unit operation determining means determines that the outdoor unit is operating upon the first periodic transmission signal.

The operation resuming means further includes multi connection determining means which determines whether there is provided the single connection or the multi connection, and single connection resuming means which resumes the operations upon the first periodic transmission signal being received for the single connection.

Although the embodiment of the present invention is detailed above, the present invention is not limited to the embodiment, but various variations may be possible without departing from the spirit of the present invention disclosed within the scope of the claims. A description will be given of variations of the present invention.
(1) It is only necessary that the number of the indoor units A, B connected to the outdoor unit 1 is plural, and may be 3 or more.
(2) The transmission interval of the periodic transmission signal may be properly changed, and may be three or four minutes other than five minutes.
(3) The order of steps in the respective flowcharts may be properly changed, STEP 22 and STEP 23 may be placed before STEP 21, for example.
(4) Although the control means including the operation resuming means is constituted by the plurality of the microcomputers 8, 19, 14, the number and arrangement thereof may be property changed.
(5) STEP 23 is not always necessary. However, STEP 23 is preferably provided upon the air conditioner being universally used both for the multi connection and signal connection.

### INDUSTRIAL APPLICABILITY

On a multi-connection air conditioner where a plurality of Indoor units are connected to an outdoor unit, even if one indoor unit is in a manual mode which instructs a heating operation, cooling operation, dehumidifying operation, and the like, and the other indoor unit is in an automatic mode which instructs an automatic operation, the operations can be smoothly resumed upon the electric power recovery. Thus, the present invention is optimally applied to an air conditioner having the multi connection. If it is determined that there is provided the single connection, the present invention may be applied to an air conditioner having the single connection by resuming the operations upon a first periodic transmission signal.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An air conditioner, wherein an outdoor unit (1) is connected to a plurality of indoor units (A,B), remote controllers (2,3) are respectively provided for said respective indoor units (A,B), said remote controllers (2,3) are operated to transmit an operation in a manual mode instructing a heating operation, a cooling operation, a dehumidifying operation, and the like, or an operation in an automatic mode instructing an automatic operation as an operation instruction signal to said door units (A,B), resulting in said indoor units (A,B) and said outdoor unit (1) starting the operations, wherein:
operations resuming means is provided which resumes the operations of said indoor units (A,B) and said outdoor unit (1) upon an electric power recovery after said indoor units (A,B) and said outdoor unit (1) being stopped operating due to an electric power failure,
an operation power source of said remote controllers (2,3) is backed up by a battery, and said remote controllers (2,3) thus transmit a periodic transmission signal including the instructed operation mode at a predetermined time interval after the operation instruction signal being transmitted, and
when said operation resuming means receives the periodic transmission signal from said remote controller (2,3) while said indoor units (A,B) are stopped after an electric power recovery, if the instructed operation mode is the manual mode, said operation resuming means resumes the operations of said outdoor unit (1) and a corresponding indoor unit (A,B) upon a first periodic transmission signal, and alternatively, the instructed operation mode is the automatic mode, said operation resuming means resumes the operations of said outdoor unit (1) and the corresponding indoor unit (A,B) upon a second periodic transmission signal, or third or subsequent periodic transmission signal.

2. An air conditioner, wherein a remote controller (2,3) is operated to transmit an operation in a manual mode instructing a heating operation, a cooling operation, a dehumidifying operation, and the like, or an operation in an automatic mode instructing an automatic operation as an operation instruction signal to an indoor unit (A,B), resulting in said indoor unit (A,B) and an outdoor unit (1) starting the operations, wherein :
operation resuming means is provided which resumes the operations of said indoor unit (A,B) and said outdoor unit (1) upon an electric power recovery after said indoor unit (A,B) and said outdoor unit (1) being stopped operating due to an electric power failure,
an operation power source of said remote controller (2,3) is backed up by a battery, and said remote controller (2,3) thus transmits a periodic transmission signal including the instructed operation mode at a predetermined time interval after the operation instruction signal being transmitted, and
when said operation resuming means receives the periodic transmission signal from said remote controller (2,3) while said indoor unit (A,B) is stopped after an electric power recovery, if a single connection is provided, said operation resuming means resumes the operations of said outdoor unit (1) and a corresponding indoor unit (A,B) upon a first periodic transmission signal, if a multi connection is provided and the instructed operation mode is the manual mode, said operation resuming means resumes the operations of said outdoor unit (1) and the corresponding indoor unit (A,B) upon the first periodic transmission signal, and if the multi connection is provided and the instructed operation mode is the automatic mode, said operation resuming means resumes the operations of said outdoor unit (1) and the corresponding indoor unit (A,B) upon a second periodic transmission signal, or third or subsequent periodic transmission signal.

3. The air conditioner according to claim 1 or 2, **characterized in that** if said outdoor unit (1) has already been operating when said operation resuming means receives the first periodic transmission signal, said operation resuming means resumes the operation of the corresponding indoor unit (A,B) upon the first periodic transmission signal regardless of the instructed operation mode.

## Patentansprüche

1. Klimaanlage, worin eine Außeneinheit (1) mit einer Anzahl von Inneneinheiten (A, B) verbunden ist, Fernsteuerungen (2, 3) jeweils für die jeweiligen Inneneinheiten (A, B) vorgesehen sind, wobei die Fernsteuerungen (2, 3) so betrieben werden, daß sie einen Betrieb in einem manuellen Modus, der einen Heizbetrieb, einen Kühlbetrieb, einen Entfeuchtungsbetrieb und dergleichen anweist, oder einen Betrieb in einem automatischen Modus, der einen automatischen Betrieb anweist, als ein Betriebsbefehlssignal an die Inneneinheiten (A, B) senden, was dazu führt, daß die Inneneinheiten (A, B) und die Außeneinheit (1) die Betriebe beginnen, worin ein Betriebwiederaufnahmemittel vorgesehen ist, das die Betriebe der Inneneinheiten (A, B) und der Außeneinheit (1) nach einer Wiederherstellung der Stromversorgung aufnimmt, nachdem der Betrieb der Inneneinheiten (A, B) und der Außeneinheit (1) aufgrund eines elektrischen Stromausfalls angehalten worden ist,
wobei eine Betriebsstromversorgung der Fernsteuerungen (2, 3) durch eine Batterie vor Ausfall gesichert ist, und die Fernsteuerungen (2, 3) somit ein periodisches Übertragungssignal, das den angewiesenen Betriebsmodus enthält, in einem vorab festgelegten zeitlichen Abstand sendet, nachdem das ßetriebsbefehlssignal gesendet worden ist, und
wenn das Betriebwiederaufnahmemittel das periodische Übertragungssignal von der Fernsteuerung (2, 3) empfängt, während die Inneneinheiten (A, B) nach einer Wiederherstellung der Stromversorgung angehalten sind, wenn der angewiesene Betriebsmodus der manuelle Modus ist, das Betriebwiederaufnahmemittel die Betriebe der Außeneinheit (1) und einer korrespondierenden Inneneinheit (A, B) bei einem ersten periodischen Übertragungssignal wieder aufnimmt, und wenn alternativ der angewiesene Betriebsmodus der automatische Modus ist, das Betriebwiederaufnahmemittel die Betriebe der Außeneinheit (1) und der korrespondierenden Inneneinheit (A, B) bei einem zweiten periodischen Übertragungssignal oder dritten oder nachfolgenden periodischen Übertragungssignal wiederaufnimmt.

2. Klimaanlage, worin eine Fernsteuerung (2, 3) so betrieben wird, das sie einen Betrieb in einem manuellen Modus, der einen Heizbetrieb, einen Kühlbetrieb, einen Entfeuchtungsbetrieb und dergleichen anweist, oder einen Betrieb in einem automatischen Modus, der einen automatischen Betrieb anweist, als ein Betriebsbefehlssignal an eine Inneneinheil (A, B) sendet, was dazu führt, daß die Inneneinheit (A, B) und eine Außeneinheit (1) die Betriebe beginnen,
worin ein Betriebwiedaraufnahmemittel vorgesehen ist das die Betriebe der Inneneinheit (A, B) und der Außeneinheit (1) nach einer Wiederherstellung der Stromversorgung wiederaufrimmt, nachdem der Betrieb der Inneneinheit (A, B) und der Außeneinheit (1) während eines elektrischen Stromausfalls angehalten worden sind,
wobei eine Betriebsstromversorgung der Fernsteuerung (2, 3) durch eine Batterie vor Ausfall gesichert ist, und die Fernsteuerung (2, 3) somit ein periodisches Übertragungssignal, das den angewiesenen Betriebsmodus enthält, in einem vorab festgelegten zeitlichen Abstand sendet, nachdem das Betriebsbefehlssignal gesendet worden ist, und
wenn das Betriebswiederaufnahmemittel das periodische Übertragungssignal von der Fernsteuerung (2, 3) empfängt, während die Inneneinheit (A, B) nach einer Wiederherstellung der Stromversorgung angehalten ist, Wenn eine Einzelvezbindung vorgesehen ist, das Betrielbswiederaufnahmemittel die Betriebe der Außeneinheit (1) und einer korrespondierenden Inneneinheit (A, B) bei einem ersten periodischen Übertragungssignal wiederaufnimmt, wenn eine Mebrfachverbindung vorgesehen ist und der angewiesene Betriebsmodus der manuelle Modus ist, das Betriebwiederaufnahmermittel die Betriebe der Außeneinheit (1) und der korrespondierenden Inneneinheit (A, B) bei dem ersten periodischen Übertragungssignal wiederaufnimmt, und wenn die Mehrfachverbindung vorgesehen ist und der angewiesene Betriebsmodus der automatische Modus ist, das Betriebwiederaufnahmemittel die Betriebe der Außeneinheit (1) und der korrespondierenden Inneneinheit (A, B) bei einem zweiten periodischen Übertragungssignal oder dritten oder nachfolgenden periodischen Übertragungssignal wieder aufnimmt.

3. Klimaanlage nach Anspruch 1 oder 2, **dadurch gekennzeichnet, daß**, wenn die Außeneinheit (1) bereits im Betrieb gewesen ist, wenn das Betriebwiederaufnahmemittel das erste periodische Übertragungssignal empfängt, das Betriebwiederaufnahmemittel den Betrieb der korrespondierenden Inneneinheit (A, B) bei dem ersten periodischen Übertragungssignal unabhängig vom angewiesenen Betriebsmodus, aufnimmt.

## Revendications

1. Conditionneur d'air, dans lequel une unité externe (1) est connectée à une pluralité d'unités internes (A, B), des dispositifs de commande à distance (2, 3) sont prévus respectivement pour lesdites unités internes respectives (A, B), lesdits dispositifs de commande à distance (2, 3) sont employés pour transmettre une opération dans un mode manuel ordonnant une opération de chauffage, une opération de refroidissement, une opération de déshumidification, et similaires, ou une opération dans un mode automatique ordonnant une opération automatique telle que, par exemple, un signal d'instruction de fonctionnement vers lesdites unités internes (A, B), par quoi lesdites unités internes (A, B) et ladite unité externe (1) débutent les opérations, dans lequel :
des moyens de reprise de fonctionnement sont prévus, qui restaurent le fonctionnement desdites unités internes (A, B) et de ladite unité externe (1) lors d'une reprise de l'alimentation électrique après que lesdites unités internes (A, B) et ladite unité externe (1) se sont arrêtées en raison d'une défaillance de l'alimentation électrique ;
une source de puissance de fonctionnement desdits dispositifs de commande à distance (2, 3) est secondée par une batterie, et lesdits dispositifs de commande à distance (2, 3) transmettent ainsi un signal de transmission périodique comprenant le mode de fonctionnement ordonné à un intervalle de temps prédéterminé après que le signal d'instruction de fonctionnement a été transmis ; et
quand lesdits moyens de reprise de fonctionnement reçoivent le signal de transmission périodique en provenance desdits dispositifs de commande à distance (2, 3) alors que lesdites unités internes (A, B) sont arrêtées après une reprise de l'alimentation électrique, si le mode de fonctionnement ordonné est le mode manuel, lesdits moyens de reprise de fonctionnement restaurent le fonctionnement de ladite unité externe (1) et d'une unité interne correspondante (A, B) à réception d'un premier signal de transmission périodique et si, en variante, le mode de fonctionnement ordonné est le mode automatique, lesdits moyens de reprise de fonctionnement restaurent le fonctionnement de ladite unité externe (1) et de l'unité interne correspondante (A, B) à réception d'un deuxième signal de transmission périodique, ou d'un troisième signal de transmission périodique, ou plus.

2. Conditionneur d'air, dans lequel un dispositif de commande à distance (2, 3) est employé pour transmettre une opération dans un mode manuel ordonnant une opération de chauffage, une opération de refroidissement, une opération de déshumidification, et similaires, ou une opération dans un mode automatique ordonnant une opération automatique telle que, par exemple, un signal d'instruction de fonctionnement vers une unité interne (A, B), par quoi ladite unité interne (A, B) et une unité externe (1) débutent les opérations, dans lequel :
des moyens de reprise de fonctionnement sont prévus, qui restaurent le fonctionnement de ladite unité interne (A, B) et de ladite unité externe (1) lors d'une reprise de l'alimentation électrique après que ladite unité interne (A, B) et ladite unité externe (1) se sont arrêtées en raison d'une défaillance de l'alimentation électrique ;
une source de puissance de fonctionnement dudit dispositif de commande à distance (2, 3) est secondée par une batterie, et ledit dispositif de commande à distance (2, 3) transmet ainsi un signal de transmission périodique comprenant le mode de fonctionnement ordonné à un intervalle de temps prédéterminé après que le signal d'instruction de fonctionnement a été transmis ; et
quand lesdits moyens de reprise de fonctionnement reçoivent le signal de transmission périodique en provenance dudit dispositif de commande à distance (2, 3) alors que ladite unité interne (A, B) est arrêtée après une reprise de l'alimentation électrique, si une seule connexion est prévue, lesdits moyens de reprise de fonctionnement restaurent le fonctionnement de ladite unité externe (1) et d'une unité interne correspondante (A, B) à réception d'un premier signal de transmission périodique ; si une connexion multiple est prévue et que le mode de fonctionnement ordonné est le mode manuel, lesdits moyens de reprise de fonctionnement restaurent le fonctionnement de ladite unité externe (1) et de l'unité interne correspondante (A, B) à réception du premier signal de transmission périodique ; et, si la connexion multiple est prévue et que le mode de fonctionnement ordonné est le mode automatique, lesdits moyens de reprise de fonctionnement restaurent le fonctionnement de ladite unité externe (1) et de l'unité interne correspondante (A, B) à réception d'un deuxième signal de transmission périodique, ou d'un troisième signal de transmission périodique, ou plus.

3. Conditionneur d'air selon la revendication 1 ou 2, **caractérisé en ce que** si ladite unité externe (1) est déjà en fonctionnement quand lesdits moyens de reprise de fonctionnement reçoivent le premier signal de transmission périodique, lesdits moyens de reprise de fonctionnement restaurent le fonctionnement de l'unité interne correspondante (A, B) à réception du premier signal de transmission périodique quel que soit le mode de fonctionnement ordonné.
